# EUROPÄISCHE PATENTSCHRIFT

(11) **EP 1 533 158 B1**
(45) Veröffentlichungstag und Bekanntmachung des Hinweises auf die Patenterteilung: **02.03.2011**
(21) Anmeldenummer: 04027147.0
(22) Anmeldetag: 16.11.2004
(51) Int. Cl.: B60J 1/20

(54) **Seitenfensterrollosystem mit Konturteil**
Side window roller blind system comprising a window contour part
Système de store à enrouleur pour vitres latérals pourvu d'un pièce de contour de vitre

(30) Priorität: 19.11.2003 DE 10354233
(43) Veröffentlichungstag der Anmeldung: 25.05.2005
(73) Patentinhaber: BOS GmbH & Co. KG, 73760 Ostfildern (DE)
(72) Erfinder: Ayran, Ekrem, 90402 Nürnberg (DE)
(74) Vertreter: Rüger, Barthelt & Abel Patentanwälte

(56) Entgegenhaltungen:
- EP-A1- 1 306 251
- DE-A1- 3 822 378
- DE-A1- 10 215 322
- DE-A1- 10 215 331
- DE-U1- 29 901 928

## Beschreibung

Bei viertürigen PKW's, und zwar sowohl bei Limousinen als auch bei Kombi-PKW, ist in der Regel das Seitenfenster in den hinteren Seitentüren geteilt ausgeführt. Das Seitenfenster setzt sich im Wesentlichen aus einem rechteckigen Abschnitt zusammen und einem sich in Richtung auf das Heck daran anschließenden etwa dreieckförmigen Teil. Diese beiden Abschnitte sind durch eine Führungssäule, in der die bewegliche Fensterscheibe geführt ist, voneinander getrennt.

Der dreieckförmige Abschnitt weist gegenüber der trennenden Führungssäule eine sehr starke Krümmung auf. Die Unterkante dieses Fensterbereiches führt zunächst einigermaßen gerade von der trennenden Führungssäule weg und steigt zum hinteren, spitzen Ende des Fensterabschnittes mehr oder weniger stark an.

Während es verhältnismäßig einfach ist, für den rechteckförmigen Teil das Fensterrollo zu gestalten, bereitet der dreieckförmige Bereich erhebliche Probleme, wenn es darum geht, diesen Teil gut zu verschließen.

Ähnlich spitz zulaufende hintere Seitenfenster finden sich bei zweitürigen Limousinen. Hier sind die Fenster allerdings einteilig.

Aus der EP 1 129 871 ist ein Seitenfensterrollosystem bekannt, das für den hinteren Bereich eines Fensters einer Seitentür geeignet ist. Dieses Rollo weist eine Wickelwelle auf, die im Bereich der trennenden Führungssäule angeordnet ist und die durch einen Federmotor in die Aufwickelstellung der Rollobahn vorgespannt ist.

An der Vorderkante der Rollobahn ist eine Öse vorgesehen, an der ein Betätigungshebel anscharniert ist. Der Betätigungshebel ist unterhalb der Fensterkante in zwei Führungsbahnen zwangsgeführt. In der eingefahrenen Stellung liegt der Betätigungshebel etwa parallel zu der Wickelwelle bzw. der die Fenstereinheit trennenden Führungsschiene, während er in der anderen Stellung in Richtung auf die Spitze des dreieckförmigen Fensterteils geschwenkt ist. In dieser Stellung liegt der Hebel schräg vor der Rollobahn und ist damit sichtbar.

Die EP 1 306 251 A1 beschreibt eine Rolloanordnung für das Seitenfenster einer hinteren Seitentür. Die Anordnung umfasst zwei Rollobahnen, eine, die vor dem im Wesentlichen viereckigen Fenster und eine zweite Rollobahn, die vor dem angenähert dreieckförmigen Fenster ausziehbar ist. Die Rollobahn für das dreieckige Fenster ist auf einer Wickelwelle aufwickelbar, die vertikal angeordnet ist. Unterhalb der Fensterbrüstung verläuft eine Führungsschiene mit einem Gleiter. Der Gleiter wird über einen flexibles Schubglied angetrieben und weist einen Arm auf, der nach oben durch einen Schlitz in der Fensterbrüstung ragt. An dem freien Ende dieses Arms ist die Spitze der Rollobahn angenietet. Im einzelnen offenbart die EP 1 306 251 A1 folgende Merkmale:
- eine drehbar gelagerte Wickelwelle, die dem Randbereich mit starker Krümmung gegenüber liegt,
- eine Rollobahn, die mit einer Kante an der Wickelwelle befestigt ist,
- ein Konturteil, das an der Rollobahn befestigt ist und von dem ein Kantenbereich eine Kontur aufweist, die dem Randbereich des Seitenfensters gegenüber der Wickelwelle entspricht,
- eine Führungsschiene, die neben der ausgezogenen Rollobahn angeordnet ist,
- einen Führungsschlitten, der mittels der Führungsschiene geführt ist, und
- ein Scharnier, das das Konturteil mit dem Schlitten verbindet und dessen Scharnierachse auf einer durch die ausgezogene Rollobahn definierten Ebene senkrecht steht.

Ausgehend hiervon ist es Aufgabe der Erfindung, ein Seitenfensterrolsystem für Kraftfahrzeuge zu schaffen, bei denen die Betätigungsmechanik weniger störend ins Auge fällt.

Diese Aufgabe wird erfindungsgemäß mit dem Seitenfensterrollosystem mit den Merkmalen des Anspruches 1 gelöst.

Bei dem neuen Seitenfensterrollosystem befindet sich die Wickelwelle dem stark gekrümmten Randbereich des Seitenfensters gegenüber. An der Wickelwelle ist eine Rollobahn befestigt, deren Zuschnitt dem Aussehen des Fensters entspricht.

Die Rollobahn ist mit einer Kante an der Wickelwelle befestigt, während die von der Wickelwelle abliegende Kante der Rollobahn mit einem Konturteil versehen ist. Dieses Konturteil ist so gestaltet, dass es bei aufgespannter Rollobahn sich an den stark gekrümmten Randabschnitt anpasst und dort weitgehend dicht abschließen kann. Das Konturteil ist mit Hilfe eines Scharniers an einem Schlitten anscharniert, der unterhalb des Fensters innerhalb des Fahrzeugs, beispielsweise innerhalb der Tür, in einer Führungsschienenanordnung geführt ist.

Mit Hilfe des Scharniers kann sich das Konturteil bei eingefahrener Rollobahn gut an der Wickelwelle anlegen, damit es möglichst wenig vorspringt, während es bei ausgefahrenem Rollo unter gleichzeitiger Spannung der Rollobahn über die gesamte Fläche in den stark gekrümmten Bereich des Seitenfensters vorgeschoben wird. Dazu reicht es aus, wenn ein streifenförmiges Konturteil Verwendung findet.

Bei dem neuen Seitenfensterrollosystem ist das Konturteil gleichzeitig Bestandteil der Betätigungs- oder Antriebseinrichtung und Bestandteil der Rollobahn, um das Fenster über eine große Fläche abzudecken. Dadurch entfällt der beim Stand der Technik deutliche sichtbare Hebel, der in störender Weise vor der Rollobahn verläuft. Das Konturteil wird gleichsam zum Betätigungshebel selbst.

Das neue Seitenfensterrollosystem wird besonders einfach, wenn zur Verbindung des Konturteils mit dem Schlitten lediglich ein einziges Scharnier vorgesehen ist.

Eine sehr platzsparende und formschöne Anordnung ergibt sich, wenn das Konturteil eine längliche Gestalt hat und beispielsweise von zwei bogenförmig gekrümmten Kanten begrenzt ist, die ausgehend von dem Führungsschlitten aufeinander zu laufen.

Um die gewünschte Verschwenkung des Konturteils zu erreichen, ist das Konturteil mit einem Mitnehmer versehen, der bezüglich der Scharnierachse auf der dem Konturteil gegenüberliegenden Seite liegt.

Dieser Mitnehmer kann mit einem Anschlag zusammenwirken, der am Ende des Ausfahrhubs des Seitenfensterrollos angeordnet ist.

Fertigungstoleranzen an der Tür werden ausgeglichen, wenn der Anschlag federelastisch nachgiebig ist.

Das neue Seitenfensterrollosystem eignet sich insbesondere für Seitenfenster, die eine gerade Unterkante aufweisen.

Solche Fenster sind an den Fenstern von Kraftfahrzeugen anzutreffen, die durch eine Trennsäule in zwei Abschnitte aufgeteilt ist, von denen der eine Fensterabschnitt im Wesentlichen rechteckig und der andere zumindest angenähert dreieckförmig ist.

Eine platzsparende Unterbringung der Wickelwelle wird erreicht, wenn die Wickelwelle vertikal ausgerichtet ist. Hierzu kann sie beispielsweise in der Trennsäule untergebracht werden.

Die Führung über den Führungsschlitten lässt sich weitgehend unterhalb der Fensterbrüstung unterbringen, wenn die Rollobahn eine gerade Kante aufweist.

Eine lediglich einseitige Führung der Rollobahn ist möglich, wenn die Rollobahn durch Stäbe ausgesteift ist, die parallel zur Achse der Wickelwelle ausgerichtet sind. Dadurch wird verhindert, dass Abschnitte der Rollobahn, die oberhalb des Konturteils verlaufen und nach bogenförmig berandet sind, wegen der dort praktisch nicht vorhandenen Spannung nach innen ins Fahrzeug hinein klappen.

Eine sehr einfache Betätigung wird erreicht, wenn in der Führungsschiene ein Betätigungsglied läuft, das mit dem Schlitten verbunden ist. Das Betätigungsglied kann beispielsweise ein in der Führungsschiene ausknicksicher geführtes, biegsames Schubglied sein.

Es ist aber auch möglich hier Zugseile einzusetzen, um die Bewegung der Rollobahn zu erzielen.

Anstelle der Verwendung eines Betätigungsgliedes, das mit dem Schlitten zusammenwirkt, ist es auch möglich, das eine Betätigungsglied am Konturteil angreifen zu lassen, um die gewünschte Schwenkbewegung zu erreichen.

Die Antriebseinrichtung des neuen Seitenfensterrollosystems kann einen Elektromotor und eine Feder umfassen. Die Feder kann als Federmotor mit der Wickelwelle zusammenwirken, während der Elektromotor an dem Konturteil, bzw. dem Schlitten, wirksam wird.

Im Übrigen sind Weiterbildungen der Erfindung Gegenstand von Unteransprüchen.

Dem Leser wird beim Studium des nachfolgenden Ausführungsbeispiels klar, dass eine Reihe von Abwandlungen möglich sind.

In der Zeichnung ist ein Ausführungsbeispiel des Gegenstandes der Erfindung dargestellt. Es zeigen:
- Fig. 1: den aufgebrochen veranschaulichten Heckbereich eines Kraftfahrzeugs mit Blick auf die Innenseite der hinteren rechten Seitentür.
- Fig. 2: einen aufgebrochenen Abschnitt der Tür nach Fig. 1, unter Veranschaulichung des Aufbaus des Sei- tenfensterrollosystems in einer Prinzipdarstellung, und
- Fig. 3: den Konturteil des Seitenfensterrollos nach Fig. 1, in einer vergrößerten Prinzipdarstellung, un- ter Veranschaulichung der Schwenkbewegung.

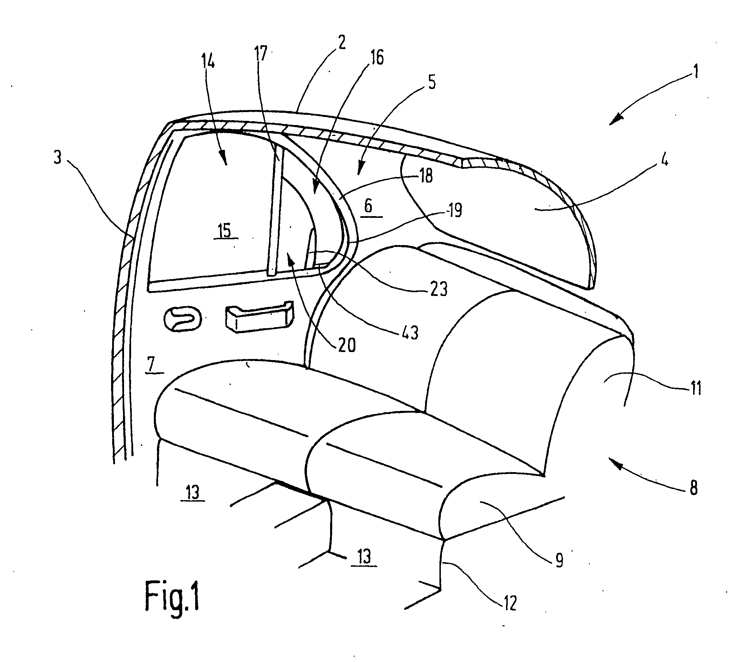

Fig. 1 stellt den aufgebrochen abgeschnittenen Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht. So sind beispielsweise Karosserieinnenstrukturen, wie Versteifungen und Befestigungsmittel, nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule trägt eine Innenverkleidung 6.

Zwischen der B-Säule und der C-Säule ist an der B-Säule eine hintere rechte Seitentür in der bekannten Weise anscharniert.

Auf der Höhe der hinteren rechten Seitentür befindet sich eine Rücksitzbank 8 zu der eine Sitzfläche 9 sowie eine Rücksitzlehne 11 gehören. Die Rücksitzfläche 9 liegt auf einer Sockelfläche 12, die zu der Bodengruppe gehört und vor der Fußräume 13 ausgebildet sind.

Auf Höhe der Oberkante der Rücksitzlehne 11 erstreckt sich eine Hutablage zu der Unterkante der Heckscheibe 4.

Die hintere rechte Seitentür 7 ist in der für Limousinen üblichen Weise mit einem Seitenfenster 14 versehen. Das Seitenfenster 14 gliedert sich in einen ersten Fensterabschnitt 15 sowie einen hinteren zweiten Fensterabschnitt 16. Der erste Fensterabschnitt 15 hat eine im Wesentlichen rechteckige Gestalt und wird nach hinten von einer Führungssäule 17 begrenzt, die gleichzeitig eine Kante des zweiten Fensterabschnitts 16 darstellt. Der zweite Fensterabschnitt 16 wird gegenüber der Führungssäule 17 von einem Türrahmen 18 begrenzt, der zusammen mit der Führungssäule 17 die Gestalt des zweiten Fensterabschnitts 16 festlegt. Er ist, wie dargestellt, etwa dreieckförmig, wobei bei 19 die Berandung eine starke Krümmung aufweist. Diese starke Krümmung liegt der Führungssäule 17 gegenüber.

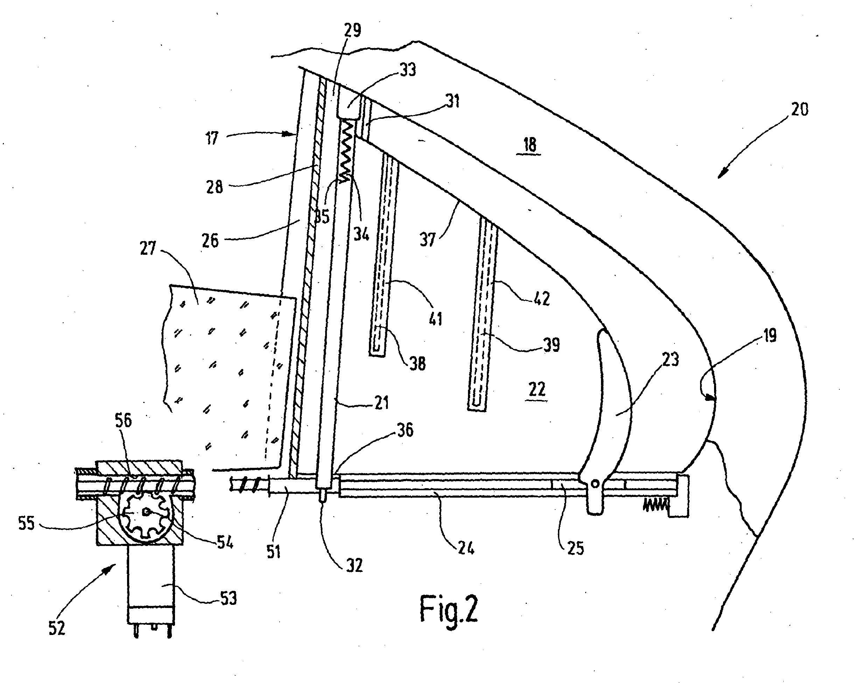

Dem zweiten Fensterabschnitt 16 ist ein Seitenfensterrollosystem 20 zugeordnet. Der prinzipielle Aufbau des Seitenfensterrollosystems 20 ist in Fig. 2 im Einzelnen gezeigt.

Zu dem Seitenfensterrollosystem 20 gehören als wesentliche Elemente, eine Wickelwelle 21, eine Rollobahn 22, ein Konturteil 23, eine Führungsschiene 24, ein Führungsschlitten 25, sowie vorzugsweise auch die bereits erwähnte Führungssäule 17.

Die Führungssäule 17 trägt auf ihrer dem ersten Fensterabschnitt 15 zugekehrten Seite zwei parallel zueinander verlaufende Führungsleisten 26, die zwischen sich eine U-förmige Nut begrenzen. In der aufgebrochenen Darstellung ist lediglich eine der Führungsleisten 26 zu erkennen. Zwischen den beiden Führungsleisten und somit in der dadurch gebildeten Nut läuft eine versenkbare Seitenscheibe 27.

Die Führungssäule 17 bildet gleichzeitig ein Gehäuse, weshalb ein Rücken 28, von dem die Führungsleisten 26 ausgehen, gleichzeitig die Rückwand des Gehäuses darstellt, von der lediglich eine Seitenwand 29 zu erkennen ist. Die andere Seitenwand ist weggebrochen. Die beiden Seitenwände 29 enden an einem Auslaufschlitz, dessen Berandung bei 31 gezeigt ist.

Innerhalb dieses so gebildeten Gehäuses, d.h. innerhalb der Führungssäule 17, ist die Wickelwelle 21 drehbar gelagert. Die Achse der Wickelwelle 21 verläuft parallel zu der Führungssäule 17 und damit etwa vertikal. Sie ist am unteren Ende mit Hilfe eines Lagerzapfens 32 in einem nicht veranschaulichten Lager drehbar gelagert. Ein oberes Lager 33 ist an dem Türrahmen 18 angebracht.

Innerhalb der rohrförmigen Wickelwelle 21 befindet sich als ein Teil einer Antriebseinrichtung ein schematisch angedeuteter Federmotor 34, der einends an dem Türrahmen 18 drehfest verankert ist und andernends bei 35 an der Wickelwelle 21. Mit Hilfe des Federmotors 34 wird die Wickelwelle 21 im Aufwickelsinne der Rollobahn 22 vorgespannt. Die Rollobahn 22 weist einen Zuschnitt auf, der etwa der von dem Türrahmen 18 und der Führungssäule 17 festgelegten Öffnung folgt. Demzufolge wird die Rollobahn 22 von einer unteren Kante 36, die parallel zu einer unteren Fensterleibung verläuft, und einer dazu schräg verlaufenden Kante 37 begrenzt, die der Kontur des Türrahmens 18 folgt. Dort, wo die beiden Kanten 37 und 36 ineinander übergehen, befindet sich das Konturteil 23.

Um ein schlaffes Durchhängen der Rollobahn 22 zu verhindern, ist sie mit dünnen Stäben 38 und 39 ausgesteift, die im aufgewickelten Zustand, parallel zu der Achse der Wickelwelle 21 liegen und die sich in schlauchförmigen Taschen befinden. Die schlauchförmigen Taschen entstehen, indem auf die Rollobahn 22 schmale Streifen 41 und 42 aus einem biegeschlaffen Material aufgeklebt sind.

Die Führungsschiene 24 erstreckt sich über die gesamte Länge des geraden Abschnitts der Rahmenunterkante des zweiten Fensterabschnitts 16, und zwar unterhalb der Fensterleibung, so dass die Führungsschiene 24 von außen nicht sichtbar ist. Lediglich die Rollobahn 22 und das Konturteil 23 ragen nach oben durch einen in Fig. 1 erkennbaren Rolloschlitz 43 hindurch.

Die Führungsschiene enthält eine Führungsnut, die sich aus einer Nutenkammer 44 und einem Nutenschlitz 45 zusammensetzt, über den sich die Nutenkammer 44 nach außen öffnet. Der Nutenschlitz 45 zeigt zum Fahrzeuginneren. Der Querschnitt der Nutenkammer 44 ist quadratisch, wobei die Kantenlänge größer ist als die Weite des Nutenschlitzes 45, so dass sich eine hinterschnittene Führungsnut ergibt. In der Nutenkammer 44 läuft der Führungsschlitten 25 in Gestalt eines Gleitsteins, der im Querschnitt an den Querschnitt der Nutenkammer 44 angepasst ist. Seine Abmessungen sind entsprechend gewählt, damit der Führungsschlitten 25 klemmfrei in der Nutenkammer 44 gleiten kann. An dem Gleitstein 25 ist mittels eines Scharniers, von dem eine Scharnierachse 46 zu erkennen ist, das Konturteil 23 anscharniert. Die Scharnierachse 46 ragt von dem Gleitstein 25 durch den Nutenschlitz 45 nach außen und trägt dort das Konturteil 23. Mit Hilfe dieses Scharniers 46 kann das Konturteil 23 eine Schwenkbewegung ausführen, die in der Ebene des zweiten Fensterabschnitts 16 liegt, und deren Achse auf der durch den zweiten Fensterabschnitt 16 definierten Ebene etwa senkrecht steht.

Die Bewegung des Gleitsteins 25 wird mit Hilfe eines ausknicksicher geführten linienförmigen Schubglieds 47 bewerkstelligt, das sich aus einem zylindrischen Kern 48 und einer den zylindrischen Kern 48 wendelförmig umgebenden Rippe 49 zusammensetzt. Auf diese Weise wird eine Art biegsame Zahnstange mit Schrägverzahnung erreicht. Der Außendurchmesser über der Rippe 47 entspricht der lichten Weite der Nutenkammer 44, was eine ausknicksichere Führung gewährleistet.

Wie Fig. 2 erkennen lässt, schließt sich an die Führungsschiene 24 ein Führungsrohr 51 an, das zu einem Getriebemotor 52 führt. Der Getriebemotor 52 umfasst einen permanent erregten Gleichstrommotor 53 sowie ein Getriebe, auf dessen Ausgangswelle 54 ein Stirnzahnrad 55 drehfest sitzt. Die Teilung des Stirnzahnrades 55 entspricht der Teilung, die durch die gewendelte Rippe 49 erhalten wird. Tangential an dem Zahnrad 55 führt eine Bohrung 56 vorbei, durch die das linienförmige Schubglied 47 hindurchgeführt ist. Aufgrund der Lage der Bohrung 56 wird die gewendelte Rippe 59 mit dem Zahnrad 55 im Eingriff gehalten.

Das Führungsrohr 51 schließt sich an dem Ende der Führungsschiene 24 an, das der Führungssäule 17 benachbart ist.

Wie die Fig. 2 weiter erkennen lässt, ist die Erstreckung der Führungsschiene 24 kürzer als es dem Abstand zwischen der Führungssäule 17 und dem Scheitelpunkt des stark gekrümmten Bereiches 19 entspricht. Um dennoch auch diesen Teil abschatten zu können, ohne dass im eingefahrenen Zustand ein nennenswerter Überstand über den Schlitz 31 entsteht, ist am Ende der Führungsschiene 24 ein Anschlag 57 vorgesehen, der den Bewegungsweg des Gleitsteins 25, wie veranschaulicht, formschlüssig stoppt. Unterhalb der Führungsschiene 24 ist der Anschlag 57 mit einer Druckfeder 58 versehen.

Das Konturteil 23 ist flächig und hat die gezeigte säbel- oder schwertförmige Gestalt. Es besteht aus einem relativ festen Material. Das Konturteil 23 wird in Bewegungsrichtung von einer Kante 59 begrenzt, die der Kontur des stark gekrümmten Bereiches 19 entspricht. Eine der Kante 59 gegenüberliegende Kante 61 des Konturteils 23 ist ebenfalls relativ stark gekrümmt, wobei beide Krümmungsradien auf derselben Seite des Konturteils 23 liegen. Die beiden Kanten 59 und 61 konvergieren in Richtung auf eine Spitze 62, die von dem Scharnier 46 abliegt. Auf der dem Scharnier 46 gegenüberliegenden Seite ist das Konturteil 23 erfindungsgemäß mit einem Mitnehmer 63 versehen. Der Mitnehmer 63 ist dazu eingerichtet, mit der Druckfeder 58 zusammen zu wirken.

Die Funktion der beschriebenen Anordnung ist wie folgt:

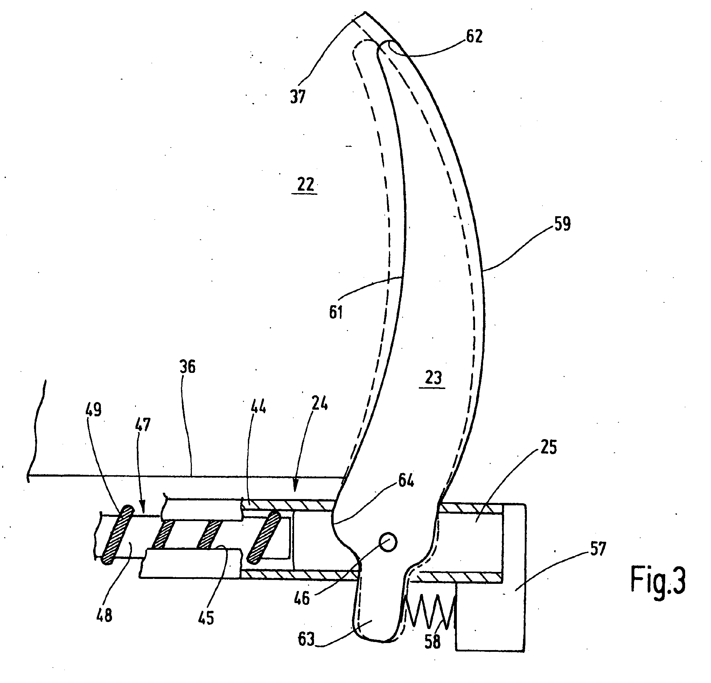

Die Erläuterung der Funktion erfolgt ausgehend von einer mittleren Stellung, wie sie in Fig. 2 gezeigt ist. In dieser Stellung ist die Rollobahn 22 ein Stück weit ausgefahren. Das biegeelastische Schubglied 47 wird in seiner Bewegung durch den angehaltenen Getriebemotor 52 blockiert. Der Federmotor 34 spannt die Wickelwelle 21 im Aufwickelsinne der Rollobahn 22 vor. Die Rollobahn 22 zieht das Konturteil 23 zusammen mit dem Gleitstein 25 gegen das betreffende stumpfe Ende des Schubglieds 47, wie dies aus Fig. 3 zu erkennen ist.

Das Konturteil 23 stellt sich mit Hilfe des Scharniers 46 in eine Zwischenstellung ein, bei der der obere Rand 37 der Rollobahn 22 weniger stark gespannt ist, als die untere Kante 36. Wird ausgehend von dieser Betriebsstellung der Getriebemotor 32 in dem Sinne in Gang gesetzt, dass er das biegeelastische Schubglied 47 aus der Führungsschiene 24 zurückzieht, kann der Gleitstein 25 dieser Bewegung folgen. Dadurch wird zunehmend Rollobahn 22 auf die Wickelwelle 21 aufgewickelt. Schließlich wird das Ende des Bewegungshubs erreicht, wobei das Aufwickeln der Rollobahn 22 gestoppt wird, sobald das Konturteil mit seinem der Wickelwelle 21 in nächst benachbarten Kanten, also beispielsweise der Spitze 62 sowie einer Ausbuchtung 64, die am unteren Ende der Kante 61 liegt, an dem gebildeten Wickel der Rollobahn 22 anstößt. Das Konturteil 23 ist in dieser Stellung in Richtung auf die Wickelwelle 21 zu geschwenkt. Es steht mit der Kante 59 möglichst wenig weit aus dem Schlitz 31 vor. Diese Position ist in Fig. 3 mit gestrichelten Linien gezeigt.

Wenn die Rollobahn 22 ausgehend von dieser Stellung vor dem zweiten Fensterabschnitt 16 aufgespannt werden soll, wird der Getriebemotor 52 mit der umgekehrten Drehrichtung in Gang gesetzt. Er schiebt das flexible Schubglied 47 in die Führungsschiene 24 vor. Das Schubglied 47 schiebt dabei den Gleitstein 35 vor sich her. Dadurch wird gegen die Kraft des Federmotors 34 die Rollobahn 22 von der Wickelwelle abgezogen.

Da das Konturteil 23, was den Kraftverlauf anbelangt, im Bereich der etwa unteren Hälfte der Rollobahn 22 wirksam ist, ist der obere Teil der Rollobahn 22 weniger gespannt und neigt zum Schlaffsein. Sobald jedoch das Ende des Bewegungshubs erreicht wird, stößt der Gleitstein 25 an dem Anschlag 57 an. Ein Stück vorher ist bereits der Mitnehmer 63 an die Druckfeder 58 angestoßen. Die Druckfeder 58 schwenkt über den Mitnehmer 63 das Konturteil 23 im Uhrzeigersinne um das Scharnier 46 nach rechts. Dadurch wird auch im oberen Bereich der Rollobahn 22 Spannung aufgebaut, und außerdem wird das Konturteil 23 parallel zu dem stark gekrümmten Bereich 19 ausgerichtet, so dass die Kante 59 über ihren gesamten Verlauf sehr gut der Kontur des stark gekrümmten Bereiches 19 folgt.

Würde der Konturteil 23 in dieser Position unschwenkbar an dem Gleitstein 25 befestigt sein, würde die Kante 23 sehr viel weiter über den Schlitz 31 nach außen vorstehen. Das Vorstehen aus dem Schlitz 31 und die endgültige Spannung des oberen Bereiches bei voll ausgefahrener Rollobahn 22 wird durch das bewegliche Konturteil 23 erreicht. Dabei wirkt die Druckfeder 58 selbst einstellend, indem sie die Kraft begrenzt, mit der Spannungen in der Rollobahn 22 in einem gedachten Streifen oberhalb des Konturteils 23 aufgebaut werden.

Ein Seitenfensterrollosystem für dreieckförmige Fenster weist eine Rollobahn auf, die an dem spitzen Ende mit einem Konturteil versehen ist. Das Konturteil ist schwenkbar an einem Führungsschlitten angebracht und kann sich bei eingefahrenem Rollo nach der Wickelwelle ausrichten, während es im ausgefahrenen Zustand in eine Zwangslage gebracht wird, in der es von der Wickelwelle ein Stück weit weg geschwenkt wird, um die Fensteröffnung möglichst vollständig zu verdecken.

## Patentansprüche

1. Seitenfensterrollosystem (20) für Kraftfahrzeuge bei denen ein Randbereich (19) des Seitenfenster (14, 16) eine starke Krümmung aufweist,
mit einer drehbar gelagerten Wickelwelle (21), die dem Randbereich (19) mit starker Krümmung gegenüber liegt,
mit einer Rollobahn (22), die mit einer Kante an der Wickelwelle (21) befestigt ist,
mit einem Konturteil (23), das an der Rollobahn (22) befestigt ist und von dem ein Kantenbereich (59) eine Kontur aufweist, die dem Randbereich (19) des Seitenfensters (14, 16) gegenüber der Wickelwelle (21) entspricht,
mit einer Führungsschiene (24), die neben der ausgezogenen Rollobahn (22) angeordnet ist,
mit einem Führungsschlitten (25), der mittels der Führungsschiene (24) geführt ist, und
mit einem Scharnier (46), das das Konturteil (23) mit dem Schlitten (25) verbindet und dessen Scharnierachse (46) auf einer durch die ausgezogene Rollobahn (22) definierten Ebene senkrecht steht, wobei
das Konturteil (23) mit einem Mitnehmer (63) versehen ist, der bezüglich der Scharnierachse (46) auf der dem Konturteil (23) gegenüberliegenden Seite liegt und dazu dient, die gewünschte Verschwenkung des Konturteils zu erreichen.

2. Seitenfensterrollosystem nach Anspruch 1, **dadurch gekennzeichnet, dass** zur Verbindung des Konturteils (23) mit dem Schlitten (25) lediglich ein einziges Scharnier (46) vorgesehen ist.

3. Seitenfensterrollosystem nach Anspruch 1, **dadurch gekennzeichnet, dass** das Konturteil (23) von zwei bogenförmig gekrümmten Kanten (59, 61) begrenzt ist, die ausgehend von dem Führungschlitten (25) aufeinander zu laufen.

4. Seitenfensterrollosystem nach Anspruch 1, **dadurch gekennzeichnet, dass** das Konturteil (23) längliche Gestalt hat.

5. Seitenfensterrollosystem nach Anspruch 1, **dadurch gekennzeichnet, dass** der Mitnehmer (63) mit einem Anschlag (57, 58) zusammenwirkt, der am Ende des Ausfahrhubs des Seitenfensterrollos,(20) angeordnet ist.

6. Seitenfensterrollosystem nach Anspruch 5, **dadurch gekennzeichnet, dass** der Anschlag (57, 58) federelastisch nachgiebig ist.

7. Seitenfensterrollosystem nach Anspruch 1, **dadurch gekennzeichnet, dass** das Seitenfenster (16) eine im Wesentlichen dreieckförmige Gestalt aufweist.

8. Seitenfensterrollosystem nach Anspruch 1, **dadurch gekennzeichnet, dass** das Seitenfenster (16) eine gerade Unterkante aufweist.

9. Seitenfensterrollosystem nach Anspruch 1, **dadurch gekennzeichnet, dass** das Seitenfenster (16) ein Abschnitt eines Seitenfensters (14) einer hinteren Kraftfahrzeugtür (7) ist.

10. Seitenfensterrollosystem nach Anspruch 9, **dadurch gekennzeichnet, dass** das Seitenfenster (14) des Kraftfahrzeugs durch eine Trennsäulenanordnung (17) in zwei SeitztenfensteraAbschnitte (15, 16) aufgeteilt ist, von denen der eine im Wesentlichen rechteckig und der andere, zumindest angenähert, dreieckförmig ist.

11. Seitenfensterrollosystem nach Anspruch 1, **dadurch gekennzeichnet, dass** die Wickelwelle (21) vertikal angeordnet ist.

12. Seitenfensterrollosystem nach Anspruch 10, **dadurch gekennzeichnet, dass** die Wickelwelle (21) innerhalb der Trennsäulenanordnung (17) angeordnet ist.

13. Seitenfensterrollosystem nach Anspruch 1, **dadurch gekennzeichnet, dass** die Rollobahn (22) eine gerade Kante (36) aufweist.

14. Seitenfensterrollosystem nach Anspruch 1, **dadurch gekennzeichnet, dass** die Rollobahn (22) durch Stäbe (38, 39) ausgesteift ist, die parallel zur Achse der Wickelwelle (21) ausgerichtet sind.

15. Seitenfensterrollosystem nach Anspruch 1, **dadurch gekennzeichnet, dass** in der Führungsschiene (24) ein Betätigungsglied (47) läuft, dass mit dem Schlitten (25) verbunden ist.

16. Seitenfensterrollosystem nach Anspruch 15, **dadurch gekennzeichnet, dass** das Betätigungsglied (47) ein in der Führungsschiene (24) ausknicksicher geführtes, biegsames Schubglied ist.

17. Seitenfensterrollosystem nach Anspruch 1, **dadurch gekennzeichnet, dass** in der Führungsschiene (24) ein Betätigungsglied (47) läuft , das mit dem Konturteil (23) verbunden ist.

18. Seitenfensterrollosystem nach Anspruch 1, **dadurch gekennzeichnet, dass** es eine Antriebseinrichtung (52, 34) aufweist, die sich aus einem Elektromotor (52) und einem Federantrieb (34) zusammensetzt.

19. Seitenfensterrollosystem nach Anspruch 18 **dadurch gekennzeichnet, dass** der Elektromotor (52) mit der Wickelwelle (21) gekoppelt ist.

20. Seitenfensterrollosystem nach Anspruch 18 **dadurch gekennzeichnet, dass** der Elektromotor (52) mit dem Führungsschlitten (25) oder dem Konturteil (23) gekoppelt ist.

## Claims

1. Side window roller blind system (20) for motor vehicles, in which an edge region (19) of the side window (14, 16) has a sharp curvature,
with a rotatably mounted winding shaft (21), which lies opposite the edge region (19) with the sharp curvature,
with a blind sheet (22), which is fastened at one edge to the winding shaft (21),
with a contour part (23), which is fastened to the blind sheet (22) and of which one edge region (59) has a contour corresponding to the edge region (19) of the side window (14, 16) opposite the winding shaft (21),
with a guide rail (24), which is arranged next to the extended blind sheet (22),
with a guide runner (25), which is guided by means of the guide rail (24), and
with a hinge (46), which connects the contour part (23) to the runner (25) and of which the hinge axis (46) stands perpendicularly on a plane defined by the extended blind sheet (22), wherein
the contour part (23) is provided with an entrainment means (63), which lies on the side opposite the contour part (23) with respect to the hinge axis (46) and serves to achieve the desired pivoting of the contour part.

2. Side window roller blind system according to claim 1, **characterised in that** only a single hinge (46) is provided to connect the contour part (23) to the runner (25).

3. Side window roller blind system according to claim 1, **characterised in that** the contour part (23) is delimited by two edges (59, 61) curved in an arc shape, which taper towards one another from the guide runner (25).

4. Side window roller blind system according to claim 1, **characterised in that** the contour part (23) has an elongated shape.

5. Side window roller blind system according to claim 1, **characterised in that** the entrainment means (63) cooperates with a stop (57, 58), which is arranged at the end of the extension stroke of the side window roller blind (20).

6. Side window roller blind system according to claim 5, **characterised in that** the stop (57, 58) is resiliently flexible.

7. Side window roller blind system according to claim 1, **characterised in that** the side window (16) has a substantially triangular shape.

8. Side window roller blind system according to claim 1, **characterised in that** the side window (16) has a straight lower edge.

9. Side window roller blind system according to claim 1, **characterised in that** the side window (16) is a section of a side window (14) of a rear vehicle door (7).

10. Side window roller blind system according to claim 9, **characterised in that** the side window (14) of the motor vehicle is divided by a partition column arrangement (17) into two side window sections (15,16), of which one is substantially rectangular and the other is at least approximately triangular.

11. Side window roller blind system according to claim 1, **characterised in that** the winding shaft (21) is arranged vertically.

12. Side window roller blind system according to claim 10, **characterised in that** the winding shaft (21) is arranged inside the partition column arrangement (17).

13. Side window roller blind system according to claim 1, **characterised in that** the blind sheet (22) has a straight edge (36).

14. Side window roller blind system according to claim 1, **characterised in that** the blind sheet (22) is reinforced by rods (38, 39), which are oriented parallel to the axis of the winding shaft (21).

15. Side window roller blind system according to claim 1, **characterised in that** an operating member (47) connected to the runner (25) runs in the guide rail (24).

16. Side window roller blind system according to claim 15, **characterised in that** the operating member (47) is a pliant pushing member, which is guided in the guide rail (24) in a manner secure against buckling.

17. Side window roller blind system according to claim 1, **characterised in that** an operating member (47) connected to the contour part (23) runs in the guide rail (24).

18. Side window roller blind system according to claim 1, **characterised in that** it has a drive means (52, 34), which consists of an electric motor (52) and a spring drive (34).

19. Side window roller blind system according to claim 18, **characterised in that** the electric motor (52) is coupled to the winding shaft (21).

20. Side window roller blind system according to claim 18, **characterised in that** the electric motor (52) is coupled to the guide runner (25) or the contour part (23).

## Revendications

1. Système de store à enrouleur pour vitre latérale (20) destiné à des véhicules automobiles dans lesquels une partie de bord (19) de la vitre latérale (14, 16) présente une courbure importante,
comprenant un arbre d'enroulement (21) monté tournant, qui est situé en vis-à-vis de la partie de bord (19) à courbure importante,
comprenant une bande de store (22) qui est fixée par un bord à l'arbre d'enroulement (21),
comprenant un élément de contour (23) qui est fixé à la bande de store (22) et dont une zone de bord (59) présente un contour qui correspond à la partie de bord (19) de la vitre latérale (14, 16) située en vis-à-vis de l'arbre d'enroulement (21),
comprenant un rail de guidage (24) qui est disposé à côté de la bande de store (22) déroulée,
comprenant un chariot de guidage (25) qui est guidé par le rail de guidage (24), et
comprenant une charnière (46) qui relie l'élément de contour (23) au chariot (25) et dont l'axe de charnière (46) est perpendiculaire à un plan défini par la bande de store (22) déroulée, sachant que
l'élément de contour (23) est doté d'un moyen d'entraînement (63) qui est situé sur le côté opposé à l'élément de contour (23), rapporté à l'axe de charnière (46), et sert à obtenir le pivotement souhaité de l'élément de contour.

2. Système de store à enrouleur pour vitre latérale selon la revendication 1, **caractérisé par le fait que** pour relier l'élément de contour (23) au chariot (25), il est prévu une seule charnière (46).

3. Système de store à enrouleur pour vitre latérale selon la revendication 1, **caractérisé par le fait que** l'élément de contour (23) est délimité par deux bords (59, 61) incurvés en forme d'arcs, qui convergent en partant du chariot de guidage (25).

4. Système de store à enrouleur pour vitre latérale selon la revendication 1, **caractérisé par le fait que** l'élément de contour (23) a une forme allongée.

5. Système de store à enrouleur pour vitre latérale selon la revendication 1, **caractérisé par le fait que** le moyen d'entraînement (63) coopère avec une butée (57, 58) qui est placée à l'extrémité de la course de déroulement du store à enrouleur pour vitre latérale (20).

6. Système de store à enrouleur pour vitre latérale selon la revendication 5, **caractérisé par le fait que** la butée (57, 58) présente la souplesse élastique d'un ressort.

7. Système de store à enrouleur pour vitre latérale selon la revendication 1, **caractérisé par le fait que** la vitre latérale (16) a une forme sensiblement triangulaire.

8. Système de store à enrouleur pour vitre latérale selon la revendication 1, **caractérisé par le fait que** la vitre latérale (16) présente un bord inférieur droit.

9. Système de store à enrouleur pour vitre latérale selon la revendication 1, **caractérisé par le fait que** la vitre latérale (16) constitue une partie d'une vitre latérale (14) d'une portière arrière (7) de véhicule.

10. Système de store à enrouleur pour vitre latérale selon la revendication 9, **caractérisé par le fait que** la vitre latérale (14) du véhicule automobile est divisée par un agencement de montant de séparation (17) en deux parties de vitre latérale (15, 16) dont l'une a une forme sensiblement rectangulaire et l'autre a, au moins approximativement, une forme triangulaire.

11. Système de store à enrouleur pour vitre latérale selon la revendication 1, **caractérisé par le fait que** l'arbre d'enroulement (21) est disposé verticalement.

12. Système de store à enrouleur pour vitre latérale selon la revendication 10, **caractérisé par le fait que** l'arbre d'enroulement (21) est disposé à l'intérieur de l'agencement de montant de séparation (17).

13. Système de store à enrouleur pour vitre latérale selon la revendication 1, **caractérisé par le fait que** la bande de store (22) présente un bord (36) rectiligne.

14. Système de store à enrouleur pour vitre latérale selon la revendication 1, **caractérisé par le fait que** la bande de store (22) est renforcée par des tiges (38, 39) qui sont orientées parallèlement à l'axe de l'arbre d'enroulement (21).

15. Système de store à enrouleur pour vitre latérale selon la revendication 1, **caractérisé par le fait que** dans le rail de guidage (24) coulisse un élément d'actionnement (47) qui est relié au chariot (25).

16. Système de store à enrouleur pour vitre latérale selon la revendication 15, **caractérisé par le fait que** l'élément d'actionnement (47) est un élément de poussée souple qui est guidé avec résistance au flambage dans le rail de guidage (24).

17. Système de store à enrouleur pour vitre latérale selon la revendication 1, **caractérisé par le fait que** dans le rail de guidage (24) coulisse un élément d'actionnement (47) qui est relié à l'élément de contour (23).

18. Système de store à enrouleur pour vitre latérale selon la revendication 1, **caractérisé par le fait qu'**il présente un dispositif d'entraînement (52, 34) qui se compose d'un moteur électrique (52) et d'un mécanisme à ressort (34).

19. Système de store à enrouleur pour vitre latérale selon la revendication 18, **caractérisé par le fait que** le moteur électrique (52) est accouplé à l'arbre d'enroulement (21).

20. Système de store à enrouleur pour vitre latérale selon la revendication 18, **caractérisé par le fait que** le moteur électrique (52) est accouplé au chariot de guidage (25) ou à l'élément de contour (23).
